# FASCICULE DE BREVET EUROPEEN

(11) **EP 3 142 985 B1**
(45) Date de publication et mention de la délivrance du brevet: **13.06.2018**
(21) Numéro de dépôt: 15732768.5
(22) Date de dépôt: 13.05.2015
(51) Int. Cl.: C04B 28/06, C04B 28/14, C04B 20/10, C04B 103/12

(54) **CIMENT À PRISE ULTRA-RAPIDE À BASE D'ALUMINATE DE CALCIUM AMORPHE**
ULTRASCHNELL ABBINDENDER ZEMENT AUF BASIS VON AMORPHEM CALCIUMALUMINAT
ULTRA-FAST SETTING CEMENT BASED ON AMORPHOUS CALCIUM ALUMINATE

(30) Priorité: 16.05.2014 FR 1454425
(43) Date de publication de la demande: 22.03.2017
(73) Titulaire: Kerneos, 92800 Puteaux (FR)
(72) Inventeur: TOUZO, Bruno, F-69330 Meyzieu (FR)
(74) Mandataire: Jacobacci Coralis Harle
(86) Numéro de dépôt international: PCT/FR2015/051275
(87) Numéro de publication internationale: WO 2015/173525

(56) Documents cités:
- WO-A1-03/010109
- CN-A- 102 765 738
- JP-A- 2005 040 761
- JP-A- 2007 297 250
- KR-A-020070 016 170
- Denka Kaisha: "Denka SC-1", , 31 décembre 2013 (2013-12-31), XP002732514, Extrait de l'Internet: URL:http://catalogue.newchem.org/land/Up_f iles%5CMDS%20Denka%20SC-1.pdf [extrait le 2014-11-14]

## Description

### DOMAINE TECHNIQUE AUQUEL SE RAPPORTE L'INVENTION

La présente invention se rapporte au domaine des ciments à prise ultra-rapide destinés à la préparation de mortier ou de béton.

En particulier, la présente invention concerne une composition de ciment à prise ultra-rapide à base d'aluminate de calcium amorphe, son procédé de fabrication, ainsi que ses utilisations afin notamment d'accélérer la prise de ciments Portland ou afin d'optimiser la formation d'ettringite.

### ARRIERE-PLAN TECHNOLOGIQUE

Il existe de nombreuses situations où l'on désire réguler la prise d'une composition de mortier ou de béton à base de ciment Portland et/ou de ciment d'aluminate de calcium. On peut citer notamment la construction et la réfection d'ouvrages d'infrastructures, tels que les chaussées de rues ou de routes, les trottoirs. On peut encore citer la maintenance et la construction des réseaux de câbles électriques, de canalisations de gaz ou d'eau. Les travaux de réfection d'ouvrages nécessitent souvent le creusement de cavités, gênantes pour les usagers de ces ouvrages. Aussi, il est indispensable de combler rapidement ces cavités, de façon que ces ouvrages puissent être remis en service le plus rapidement possible après la fin des travaux.

Au cours des dernières années, la composition des systèmes cimentaires a évolué vers des formulations de béton permettant l'obtention d'une (très) haute résistance initiale. Ces résistances mécaniques élevées s'accompagnent cependant souvent d'une prise initiale très rapide (de l'ordre de quelques minutes) rendant la coulée de ce type de béton sans adjuvant difficile, voire impossible.

Afin de ralentir ces temps de prise, des régulateurs de prise ont été développés.

La demande de brevet EP 0081385 divulgue un ciment alumineux dont la prise est inhibée par un inhibiteur de prise, par exemple l'acide borique. La prise du ciment alumineux est déclenchée par l'introduction dans le ciment alumineux d'un réactivateur, par exemple la chaux, présent à une teneur comprise entre 0,1 et 10 % en poids par rapport au poids de ciment alumineux.

On connaît également dans l'état de la technique, le document WO2004/060828 qui décrit un accélérateur de prise pour composition comprenant du ciment Portland. Cet accélérateur de prise se trouve sous forme aqueuse et comprend: un aluminate de calcium et en poids par rapport au poids total du cet aluminate de calcium, de 0,5 à 4% d'un inhibiteur de prise et un agent anti-sédimentation. En particulier, l'inhibiteur de prise du ciment d'aluminate de calcium est choisi parmi l'acide borique, l'acide citrique ou un de leurs sels.

Le document JP2007-297250 décrit une composition de ciment à prise ultra-rapide comprenant du ciment Portland, de l'aluminate de calcium amorphe ayant un ratio molaire CaO/Al₂O₃ entre 1,25 et 1,75, du sulfate de calcium anhydre et un régulateur de prise (aluminate de métal alcalin et acide organique).

Le document CN 102 765 738 décrit une composition d'aluminate de calcium amorphe, ainsi que son procédé d'obtention. L'aluminate de calcium amorphe peut être utilisé en tant qu'additif pour composition cimentaire afin d'améliorer son temps de prise ou en tant qu'additif pour la fabrication de l'acier. En particulier, l'aluminate de calcium amorphe comprend, en masse, par rapport à sa masse totale, de 40 à 60% de CaO (C), de 30 à 60% d'Al₂O₃ (A), de 0,01 à 1 % de S, de 1 à 10% de SiO₂, de 0,05 à 3% de Fe₂O₃, de 0,01 à 5% de CaF₂, de 1 à 10% de MgO, de 0 à 3% de TiO₂ et de 0,01 à 1% de P.

Le document JP 2007 297250 décrit une composition cimentaire comprenant du ciment Portland, un aluminate de calcium amorphe, de gypse anhydre (sulfate de calcium), un aluminate de métal alcalin et des additifs (agent entraîneur de gaz), ainsi que des impuretés. Ce document enseigne que si la quantité de toutes les impuretés est inférieure à 10%, alors celles-ci n'affectent pas les propriétés de l'aluminate de calcium amorphe.

Le document KR 10200 7001 6170 décrit un agent accélérateur de prise comprenant de l'aluminate de calcium (taux de vitrification de 80% ou plus), du gypse et un aluminate de métal alcalin.

Bien que les accélérateurs de prise selon l'art antérieur soient satisfaisants, il existe toujours un besoin pour de nouvelles compositions permettant de réguler la prise d'un ciment et en particulier d'un ciment à base d'aluminate de calcium amorphe combiné ou non à un ciment Portland, qui ne détériore pas en outre les propriétés mécaniques du mortier ou béton obtenu.

Le but de la présente invention est ainsi de proposer une nouvelle composition de ciment à prise ultra-rapide qui évite, au moins en partie, les inconvénients susmentionnés et notamment qui permet une meilleure régularisation de la prise du ciment dans le temps par rapport à l'état de la technique précité.

### OBJET DE L'INVENTION

Afin de remédier à l'inconvénient précité de l'état de la technique, la présente invention propose une composition de ciment à prise ultra-rapide comprenant au moins de l'aluminate de calcium amorphe comprenant en poids par rapport au poids total de l'aluminate de calcium amorphe :
(a) de 35 à 55% d'oxyde de calcium CaO (C),
(b) de 19 à 55% d'alumine Al₂O₃ (A),
   le ratio molaire C/A étant supérieur ou égal à 1,5, de préférence 1, 7,
(c) de 0 à 10% de silice SiO₂,
caractérisée en ce que ledit aluminate de calcium amorphe comprend (d) de 5 à 16% d'oxyde de fer Fe₂O₃.

La Demanderesse a découvert, de manière surprenante, qu'une teneur particulière en oxyde de fer Fe₂O₃ permettait de réguler la cinétique de réaction des aluminates de calcium amorphes ultra-réactifs, tout en n'affectant pas la résistance mécanique du ciment obtenu et notamment sa résistance initiale.

En effet, lorsque le ratio molaire C/A des aluminates de calcium amorphes est élevé (>1,5), comme c'est le cas pour la composition de ciment selon l'invention, la réaction d'hydratation des aluminates de calcium amorphes est ultra-rapide. D'un point de vue pratique, la mise en oeuvre d'une composition de ciment à base de tels composés peut s'avérer difficile, voire impossible en raison de la vitesse de durcissement très élevée des aluminates de calcium amorphes (de l'ordre d'une dizaine de minutes). De façon connue dans l'état de la technique, il était alors nécessaire d'ajouter un inhibiteur de prise, comme l'acide borique ou l'acide citrique afin de retarder la prise. Cependant, un tel ajout présente un effet négatif sur le développement des résistances mécaniques et pénalise notamment la montée en résistance du mortier ou du béton. En particulier, le dosage efficace du retardateur pour viser un temps de prise peut s'avérer difficile, notamment sur l'anticipation de l'effet de la température. Ainsi, la composition de ciment selon l'invention présente l'avantage de s'affranchir d'un tel régulateur de prise et par conséquent, assure une meilleure résistance mécanique initiale.

En outre, la composition de ciment selon l'invention présente l'avantage de réduire les coûts de production dus à l'emploi de matières premières moins coûteuses que celles utilisées pour les compositions de ciment selon l'art antérieur, notamment celles à base d'aluminate de calcium amorphe avec un accélérateur et un retardateur de prise. En effet, selon l'invention, il n'est plus nécessaire d'ajouter un inhibiteur de prise, ni de sélectionner des matières premières très riches en alumine et en oxyde de calcium.

Dans le cadre de la présente invention, on entend « par ciment », un liant hydraulique, c'est-à-dire un matériau minéral finement moulu qui, gâché avec de l'eau, forme une pâte qui fait prise et durcit par suite de réaction et de processus d'hydratation et qui, après durcissement, conserve sa résistance et sa stabilité même sous l'eau » (Norme NF EN 197-1).

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

Dans le cadre de la présente invention, par aluminate de calcium amorphe, on entend que l'aluminate de calcium comprend un taux d'au moins 60% de phase amorphe et donc un taux de phase de cristallisation inférieur ou égal à 40% de phase cristalline. Dans le contexte de l'invention, un taux d'au moins 60% de phase amorphe signifie au moins 65%, au moins 70%, au moins 75%, au moins 80%, au moins 85%, au moins 90%, au moins 95%, au moins 97%, au moins 98%, voire au moins 99%.

Les phases cristallines pouvant être CaO.Al₂0₃, CaO.2Al₂0₃, 3CaO.Al₂0₃, 3CaO.3Al₂0₃+CaF₂, 11CaO.7Al₂0₃.CaF₂, 12CaO.7Al₂0₃ ou 3CaO.3Al₂0₃+CaSO₄ ou un de leurs mélanges. De manière préférentielle, les phases cristallines sont CaO.Al₂0₃, ou 12CaO.7Al₂0₃ ou un de leurs mélanges.

D'autres caractéristiques non limitatives et avantageuses de la composition conforme à l'invention, prises individuellement ou selon toutes les combinaisons techniquement possibles seront décrites ci-après.

L'invention a également trait a un procédé de fabrication d'une composition de ciment à prise ultra-rapide telle que décrite ci-dessus comprenant les étapes suivantes :
i) l'introduction dans un four à fusion de matières premières sources au moins d'oxyde de calcium, d'alumine et d'oxyde de fer ;
ii) la cuisson dans le four à fusion à une température minimale permettant la fusion de la composition, en général autour de 1250°C, jusqu'à 2300°C, pendant une durée permettant d'obtenir la fusion complète des matières premières, en général de 10 min à 10 heures, de sorte à former un clinker d'aluminate de calcium liquide ;
iii) la récupération en sortie du four dudit clinker d'aluminate de calcium liquide présentant, en général, une température allant de 1000°C à 1600°C ;
iv) le refroidissement après cuisson dudit clinker d'aluminate de calcium liquide de sorte à faire baisser brutalement la température du clinker d'aluminate de calcium à une température inférieure à sa température de cristallisation (qui est généralement d'au moins 1200°C) afin d'obtenir un aluminate de calcium amorphe ;
v) éventuellement, le broyage du clinker d'aluminate de calcium amorphe obtenu à l'étape iv) avec optionnellement du sulfate de calcium.

Enfin, l'invention porte également sur l'utilisation de la composition de ciment à prise ultra-rapide pour accélérer la prise des ciments Portland, ainsi que pour former de l'ettringite, notamment lorsque l'aluminate de calcium amorphe est combiné à du sulfate de calcium.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un graphique qui illustre la montée en température en °C de quatre compositions de mortier : m C-a selon l'invention, m D-a qui est également un aluminate de calcium amorphe mais contenant moins de fer, m A-c et m B-c à titre comparatif qui sont des aluminates de calcium cristallisés, en fonction du temps en minute (réaction exothermique) ;
- la figure 2 est un graphique représentant le taux de chauffage en °C des quatre compositions de mortier m C-a, m D-a, m A-c et m B-c calculé lors de la réaction exothermique illustrée sur la figure 1 ; et
- la figure 3 est un graphique représentant les charges de traction mesurées en daN en fonction du temps en minutes lors de l'essai de traction des quatre compositions de mortiers m C-a, m D-a, m A-c et m B-c.

La société Demanderesse s'est attachée au développement de nouvelles compositions de ciment à base d'aluminate de calcium amorphe très réactif adaptées aux exigences des professionnels du bâtiment, à savoir présentant des résistances mécaniques élevées tout en rendant la coulée de béton ou de mortier obtenu à partir de ce type de ciment possible sans qu'il soit nécessaire d'ajouter des régulateurs de prise classiques.

Tel qu'indiqué précédemment, la présente invention porte sur une composition de ciment à prise ultra-rapide comprenant au moins de l'aluminate de calcium amorphe comprenant en poids par rapport au poids total de l'aluminate de calcium amorphe :
(a) de 35 à 55% d'oxyde de calcium CaO (C),
(b) de 19 à 55% d'alumine Al₂O₃ (A), le ratio molaire C/A étant supérieur ou égal à 1,5, de préférence 1,7,
(c) de 0 à 10% de silice SiO₂,
caractérisée en ce que ledit aluminate de calcium amorphe comprend (d) de 5 à 16% d'oxyde de fer Fe₂O₃.

Au sens de l'invention, « au moins 5% en oxyde de fer Fe₂O₃ » englobe les pourcentages massiques suivants : 5%, 5,5%, 6%, 6,5%, 7%, 7,5%, 8%, 8,5%, 9%, 9,5%, 10%, 10,5%, 11%, 11,5%, 12%, 12,5%, 13%, 13,5%, 14%, 14,5%, 15%, 15,5%, 16%.

Ainsi, contrairement à ce qui aurait pu être attendu par un homme du métier, une teneur en oxyde de fer relativement élevée au sein de la composition de ciment ne détériore pas l'ultra-réactivité de l'aluminate de calcium amorphe, mais permet simplement de réguler sa prise tout en permettant d'obtenir une composition de mortier présentant une excellente robustesse.

En outre, l'utilisation de mortier ou de béton acquérant rapidement des résistances mécaniques représente un avantage économique important.

Selon l'invention, l'aluminate de calcium présent dans la composition de ciment est riche en fer. En particulier, l'aluminate de calcium amorphe peut comprendre, en poids, par rapport au poids total d'aluminate de calcium : (d) de 5 à 15%, et de manière encore plus préférée de 5 à 10%, idéalement de 5 à 8% d'oxyde de fer.

En particulier, l'aluminate de calcium amorphe comprend en poids par rapport à son poids total de : (a) 35 à 55%, de préférence de 42 à 52%, et de manière encore plus préférée de 47 à 51% d'oxyde de calcium.

Lorsque la teneur en oxyde de calcium est inférieure à 35% en poids, la composition de ciment selon l'invention est moins réactive ; tandis que lorsque la teneur en oxyde de calcium est supérieure à 55%, il devient plus difficile de faire fondre le composé dans un four en fusion et en particulier dans un four à réverbère.

En général, l'aluminate de calcium amorphe peut comprendre en poids par rapport à son poids total de (b) 19 à 55%, de préférence de 25 à 48%, et de manière encore plus préférée de 34 à 42% d'alumine.

La teneur en alumine est en particulier fonction de la teneur en oxyde de calcium de sorte que le ratio molaire C/A soit supérieur ou égal à 1,5, de préférence supérieur ou égal à 2, et idéalement de l'ordre de 1,5 à 3.

Egalement, l'aluminate de calcium amorphe peut comprendre en poids par rapport à son poids total de 1 à 8% et plus particulièrement de 3 à 6% de silice SiO₂.

L'aluminate de calcium amorphe selon l'invention peut comprendre des impuretés (différents des composés (a) à (d) susmentionnés) allant de 0 à 5%, de préférence de 0 à 3% en poids, par rapport au poids total de l'aluminate de calcium. Ces impuretés peuvent être par exemple un oxyde de titane (TiO₂) ou de la magnésie (MgO).

Selon une caractéristique de l'invention, l'aluminate de calcium présent dans la composition de ciment selon l'invention présente une vitesse de dissolution dans l'eau supérieure ou égale à 15.10⁻⁶ mol.s⁻¹.m⁻², de préférence supérieure ou égale à 20.10⁻⁶ mol.s⁻¹.m⁻².

Cette vitesse est mesurée par dosage du calcium libéré dans l'eau en 5 minutes par l'aluminate de calcium dans une suspension à 0,5 g.l⁻¹. La concentration en calcium est divisée par 300 secondes (5 minutes) et par la surface de l'aluminate de calcium calculée par le produit de la surface BET exprimée en m².g⁻¹ par la masse de matière (0.5 g pour 1 litre).

Selon une autre caractéristique de l'invention, l'aluminate de calcium présente une surface spécifique Blaine mesurée selon la norme NF EN196-6 allant de 2000 à 7000 cm²/g et de préférence allant de 3000 à 5000 cm²/g.

Selon une autre caractéristique de l'invention, la composition de ciment comprend une masse volumique allant de 2 à 5 g/cm³, de préférence allant de 2,5 à 3,5 g/cm³ et idéalement allant de 2,7 à 3,1 g/cm³.

En général, le sulfate de calcium se trouve sous forme d'anhydrite, de gypse ou d'hémihydrate, d'origine naturelle ou synthétique. De préférence, le sulfate de calcium se trouve sous forme d'anhydrite

Avantageusement, la composition de ciment comprend en poids par rapport au poids total de la composition de ciment : en particulier la composition de ciment selon l'invention peut comprendre de 45 à 55% d'aluminate de calcium amorphe et de 45 à 55% de sulfate de calcium.

Un mortier ou un béton composé de ce type de composés, à savoir de sulfate de calcium amorphe tel que décrit ci-dessus et de sulfate de calcium, comporte de nombreux avantages par rapport à une composition classique, les principaux étant un temps de prise et de développement des résistances rapides et une compensation du retrait. Ces avantages sont reliés à l'hydratation et notamment à la présence de sulfate de calcium hémihydrate et anhydre.

La composition de ciment peut également comprendre un traitement de surface antivieillissement.

La Demanderesse a également découvert, de manière surprenante, qu'un composé organique comportant au moins deux fonctions hydrophiles et une chaîne hydrophobe permettait d'améliorer la durée de vie d'un ciment d'aluminate de calcium amorphe tout en n'affectant pas la réactivité ou encore la résistance mécanique du ciment obtenu.

Un tel composé organique peut correspondre à celui décrit dans le document WO 03/010109 relatif à des liants hydrauliques non amorphes. Or tel que mentionné ci-dessus, les aluminates de calcium amorphes selon l'invention présentent des propriétés de surface très différentes des liants hydrauliques cristallins et en particulier une vitesse de dissolution beaucoup plus importante, rendant non évident que la composition de ciment selon l'invention pourrait être recouverte d'un tel agent de surface antivieillissement.

La concentration pondérale de ce composé organique au sein de la composition de ciment est avantageusement comprise entre 0,025 et 5% en poids par rapport au poids de la composition de ciment, de préférence entre 0,05% et 2,5%, avantageusement entre 0, 1% et 1%.

Par fonction à caractère hydrophile, on entend des fonctions qui permettent d'obtenir une compatibilité avec un milieu contenant de l'eau. De plus, ces fonctions hydrophiles ont avantageusement la capacité de réagir avec les cations ou éléments métalliques présents dans le liant hydraulique.

Les fonctions convenables pour l'invention sont notamment les fonctions acides carboxyliques, anhydrides d'acides, halogénures d'acides, amines primaires.

Les fonctions préférées de l'invention sont les fonctions acides, ou anhydrides d'acides.

Le caractère hydrophobe du produit organique est apporté par une chaîne hydrocarbonée aliphatique, aromatique, alkylaromatique ou arylaliphatique. Les chaînes aliphatiques, arylaliphatiques linéaires ou cycliques, ramifiées ou substituées sont préférées pour l'invention. Elles comprennent avantageusement entre 2 et 13 atomes de carbone.

Comme cela sera décrit ci-dessous dans la description du procédé selon l'invention, le composé organique est selon une première variante de réalisation introduit dans la composition de ciment selon l'invention lors d'une étape de co-broyage entre ledit composé organique se trouvant sous forme de poudre et d'un clinker d'aluminate de calcium amorphe selon l'invention (à savoir, à forte teneur en oxyde de fer). Selon une seconde variante de réalisation, le composé organique est mélangé à chaud avec un clinker d'aluminate de calcium amorphe à une température supérieure à la température de fusion dudit composé organique et à une température inférieure à sa température de décomposition avant d'être broyé.

Les composés organiques présentant un caractère filmogène seront donc préférés.

Toutefois, cette propriété est uniquement souhaitée de manière préférentielle. Ainsi, un composé organique non filmogène mais mouillant et s'adsorbant sur les grains de liant hydraulique est également convenable pour l'invention.

Comme composés organiques convenables pour l'invention, on peut citer les acides polycarboxiliques comme les acides dicarboxyliques tels que l'acide glutarique, l'acide succinique, l'acide adipique, l'acide octanedioïque, l'acide décanedioïque, dodécanedioïque, brassylique et leurs anhydrides et halogénures d'acide, les acides phtaliques comme l'acide orthophtalique, téréphtalique, isophtalique. En particulier, l'acide adipique est préféré.

Il est également possible, sans sortir du cadre de l'invention, d'utiliser des acides en mélange et plus particulièrement d'utiliser un mélange d'acide adipique, succinique et glutarique. Ce mélange est un sous-produit dans les procédés industriels de fabrication de l'acide adipique.

Les aluminates de calcium amorphes ainsi revêtus du composé organique antivieillissement conformes à l'invention sont moins sensibles à la reprise d'humidité permettant ainsi d'augmenter leur durée de conservation dans les différents conditionnements tels que silos, sacs, containers, par exemple. De plus, la coulabilité de la poudre est améliorée lors de l'opération de vidange des emballages.

La présente invention a également trait à un procédé afin de fabriquer la composition de ciment selon l'invention.

En particulier, le procédé de fabrication d'une composition de ciment à prise ultra-rapide comprend les étapes suivantes :
i) l'introduction dans un four à fusion de matières premières sources d'au moins d'oxyde de calcium, d'alumine et d'oxyde de fer ;
ii) la cuisson dans le four à fusion à une température minimale permettant la fusion de la composition, en général autour de 1250°C, jusqu'à 2300°C, pendant une durée permettant d'obtenir la fusion complète des matières premières, en général de 10 minutes à 10 heures, de sorte à former un clinker d'aluminate de calcium liquide ;
iii) la récupération en sortie du four dudit clinker d'aluminate de calcium liquide présentant une température allant généralement de 1000 à 1600°C ;
iv) le refroidissement après cuisson dudit clinker d'aluminate de calcium liquide de sorte à faire baisser brutalement la température du clinker d'aluminate de calcium à une température inférieure à sa température de cristallisation afin d'obtenir un clinker d'aluminate de calcium amorphe ;
v) éventuellement, le broyage du clinker d'aluminate de calcium amorphe obtenu à l'étape iv) de sorte à obtenir un ciment d'aluminate de calcium avec optionnellement du sulfate de calcium et/ou un agent antivieillissement composé d'un composé organique (tel que décrit ci-dessus), et
vi) éventuellement, le mélange du ciment d'aluminate de calcium obtenu à l'étape v) avec du sulfate de calcium et/ou optionnellement l'ajout d'un composé organique de sorte à obtenir un ciment d'aluminate de calcium amorphe présentant un traitement de surface antivieillissement, si ceux-ci n'ont pas été ajoutés lors de l'étape v).

Selon une première variante de réalisation, le sulfate de calcium et/ou le composé organique antivieillissement peuvent être mélangés au clinker d'aluminate de calcium amorphe lors de l'étape de broyage v). En général, le composé organique se trouve sous forme de poudre, par exemple de granulométrie moyenne inférieure ou égale à 300µm, de sorte à obtenir un ciment d'aluminate de calcium comprenant un traitement de surface antivieillissement.

Selon une autre variante de réalisation, ces composés peuvent être mélangés au ciment d'aluminate de calcium obtenu à l'issue de l'étape de broyage v).

En général, le composé organique (tel que défini ci-dessus) est mélangé à chaud au ciment d'aluminate de calcium à une température supérieure à la température de fusion dudit composé organique et à une température inférieure à sa température de décomposition. Ces températures ou domaines de températures dépendent, bien entendu, de la nature du composé organique.

Selon le procédé de l'invention, la source de calcium peut être choisie parmi : le calcaire, la chaux et les sous-produits provenant de procédés consommateurs de calcaire et de chaux comme les laitiers ou scories de sidérurgie ou d'électrométallurgie, ou un de leurs mélanges ; tandis que la source d'alumine et également d'oxyde de fer peut être choisie parmi : la bauxite (bauxite monohydrate et/ou bauxite trihydrate), les meules de corindon, les supports de catalyseur, les briques réfractaires, les hydroxydes, les alumines métallurgiques, les alumines calcinées et fondues, les sous-produits de la filière aluminium et les non-conformes de fabrication à haute teneur en alumine ou un de leurs mélanges.

Par exemple, la bauxite trihydrate peut comprendre en poids, 46 à 50% d'alumine, 14 à 20% d'oxyde de fer et 7 à 12% de silice. Elle est ainsi à la fois source d'alumine et d'oxyde de fer.

Ces matières premières sources d'oxyde de calcium, d'aluminium ou de fer se présentent généralement sous forme de blocs, comme des blocs de bauxite ou des blocs de calcaire.

En général, on introduit dans le four de 30 à 50%, de préférence de 35 à 45% et idéalement de 40% en masse de la source d'oxyde de calcium et de 50 à 70%, de préférence de 55 à 65% et idéalement de 60% en masse de source d'alumine (bloc de bauxite) par rapport à la masse totale des sources d'oxyde de calcium et d'alumine.

En particulier, le four à fusion utilisé dans le procédé selon l'invention est généralement un four à réverbère.

Un four à réverbère présente par exemple une section en L, à savoir une partie verticale et une partie horizontale qui communiquent entre elles. La partie verticale peut atteindre une dizaine de mètres de haut.

Généralement, les blocs de calcaire et de bauxites sont introduits dans le four de fusion par une ouverture disposée sur la portion haute de la partie verticale. Ces blocs sont chargés dans le four afin de remplir tout le volume de cette partie verticale et forment ainsi, à une jonction entre la partie horizontale et la partie verticale, un talus de blocs. Ce dernier est ensuite attaqué par une flamme disposée dans la partie horizontale du four, face au talus. La flamme chauffe à une température supérieure à 1500°C, voire 2000°C. Elle apporte ainsi les calories nécessaires pour fondre les blocs de calcaire et de bauxites formant un bain liquide de matières. La température des matières premières dans le four atteint en général 1400-1500°C. Les matières, une fois fondues, sortent par un trou de coulée disposé dans la partie horizontale du four.

Au cours du procédé, des gaz de combustion se forment et prennent un chemin à contre-courant de celui des blocs. Ils sont ensuite évacués par une cheminée située sur la portion haute de la partie verticale du four. Ces gaz, présentant une température de l'ordre de 1500°C, crculent ainsi entre les blocs disposés au-dessus du talus et les préchauffent par transfert de chaleur.

Les blocs de matières premières, de leur introduction au contact avec la flamme, subissent ainsi au préalable : un séchage, puis une déshydratation et une décarbonation par les gaz de combustion remontant la partie verticale du four. Le préchauffage des matières premières par les gaz de combustion est rendu possible du fait de l'empilement poreux des blocs de bauxites et de calcaire d'assez gros diamètre apte à laisser passer les gaz.

Ainsi, la cuisson des matières premières sources d'au moins d'oxyde de calcium, d'alumine et d'oxyde de fer s'effectue à une température allant de préférence de 1250 à 2300°C, de préférence de 1300 à 2000°C et en général de 1400 à 1600°C, pendant une durée allant de préférence de 5 à 12 heures, en particulier de 6 à 10 heures.

A la sortie du four, un clinker d'aluminate de calcium est ainsi obtenu. Ce clinker est refroidi très rapidement juste après la cuisson de façon à obtenir un clinker d'aluminate de calcium amorphe.

De préférence, le refroidissement peut s'effectuer à un gradient de 10 à 25°C/seconde, de préférence 15 à 20°C/seconde.

A titre d'exemple, le refroidissement brutal peut s'effectuer par trempage du clinker liquide à l'air présentant une température pas plus élevée que 500°C, de préférence pas plus élevée que 100°C, pendant un laps de temps inférieur ou égal à 1 minute, avantageusement inférieur ou égal à 15 secondes. A titre d'exemple, un jet d'air horizontal va être disposé à la sortie du four pour souffler et disperser le clinker de sorte à accélérer son refroidissement.

Une fois refroidi, le clinker d'aluminate de calcium amorphe peut être broyé finement afin d'obtenir un ciment d'aluminate de calcium amorphe (liant hydraulique) présentant une granulométrie moyenne inférieure ou égale à 500 µm.

Selon une variante de réalisation, le clinker d'aluminate de calcium peut être co-broyé avec du sulfate de calcium afin de former un ciment sulfo-aluminate de calcium amorphe.

Selon une autre variante de réalisation, le sulfate de calcium peut être mélangé avec le ciment d'aluminate de calcium amorphe préalablement broyé à l'issue de l'étape v).

Lorsque le procédé de fabrication d'une composition de ciment selon l'invention comprend une étape d'ajout de sulfate de calcium, la composition de ciment comprend de préférence en poids par rapport au poids total de la composition de ciment de 40 à 60% d'aluminate de calcium amorphe (tel que défini ci-dessus) et de 40 à 60% de sulfate de calcium, en particulier la composition de ciment selon l'invention peut comprendre de 45 à 55% d'aluminate de calcium amorphe et de 45 à 55% de sulfate de calcium.

Ce procédé permet de fabriquer une composition de ciment à base d'aluminates de calcium amorphes riches en oxyde de fer Fe₂O₃, telle que décrite ci-dessus. Bien sûr, la composition de ciment fabriquée selon ce procédé présente les mêmes caractéristiques que celles de la composition selon l'invention. Dans la mesure où elles ont déjà été décrites, elles ne seront pas plus amplement détaillées ci-dessous.

La présente invention a également pour objet l'utilisation de la composition de ciment à prise ultra-rapide telle que décrite ci-dessus pour accélérer la prise des ciments Portland.

On peut utiliser comme ciment n'importe quel ciment Portland, tel que le ciment Portland normal, le ciment Portland à durcissement rapide, le ciment Portland à durcissement super-rapide, le ciment Portland blanc, etc.

La quantité de composition de ciment selon l'invention à ajouter pour une telle utilisation varie de préférence de 8 à 20% en poids du poids du ciment Portland suivant la nature des autres constituants utilisés et des caractéristiques recherchées. La nature du Portland, principalement sa teneur en C3A, sa finesse, les types d'ajouts et la nature du sulfate de calcium lorsqu'il est présent dans la composition de ciment selon l'invention ou celui présent dans le Portland, vont influencer la quantité à ajouter.

La composition de ciment selon l'invention de par sa structure chimique (aluminate de calcium amorphe riche en oxyde de fer mélangé ou non avec un sulfate de calcium), son caractère amorphe, et sa finesse rendent l'aluminate de calcium très réactif. Le taux de combinaison avec les sulfates du Portland sera plus important et plus rapide qu'avec les aluminates de calcium classiques (cristallisés). En outre, la présence d'anhydrite de sulfate de calcium permet d'obtenir des résistances rapides par la formation d'ettringite complémentaire aux phases hydratées du Portland. Ainsi, l'efficacité de la composition de ciment selon l'invention est supérieure à celle d'un aluminate de calcium classique et les quantités à utiliser pour une même rapidité sont inférieures.

Egalement, la présente invention a pour objet l'utilisation de la composition de ciment à prise ultra-rapide telle que décrite ci-dessus pour former de l'ettringite lorsqu'elle comprend du sulfate de calcium.

La composition de ciment selon l'invention peut également être utilisée pour préparer des compositions de mortier ou de béton.

Une composition de mortier se présente généralement sous forme de poudre sèche, prête à l'emploi et peut comprendre au moins la composition de ciment telle que décrite ci-dessus en tant que liant hydraulique et au moins un granulat, ainsi qu'éventuellement un additif et/ou adjuvant courant.

A titre d'exemple, une composition du mortier ou de béton sèche comprend, en poids, par rapport au poids total de ladite composition de mortier :
- de 15 à 50%, de préférence de 30 à 40% de liant hydraulique, telle que la composition de ciment selon l'invention et/ou un ciment Portland,
- de 25 à 80%, de préférence de 50 à 70% de charges minérales,
- de 0 à 2 %, de préférence de 0,05 à 0,5% de composition fluidifiante,
- de 0 à 5% d'autres additifs (accélérateur, retardateur, antimousse, les entraîneurs d'air, les adjuvants modifiant l'ouvrabilité du béton, les hydrofuges). Ces derniers sont connus de l'homme du métier.

Tel qu'indiqué ci-dessus, dans la mesure où la composition de ciment selon l'invention est riche en oxyde de fer apte à réguler la prise du liant hydraulique (aluminate de calcium avec ou sans sulfate de calcium), il n'est pas nécessaire d'ajouter un retardateur de prise au sein de la composition de mortier ou de béton sèche.

De façon connue, le mortier comprend un mélange de ciment et de sable/fillers, tandis que le béton peut comporter en plus des agrégats, chacun dans des proportions connues de l'homme de l'art.

Les exemples suivants illustrent l'invention sans la limiter. A moins qu'il ne soit indiqué autrement dans le reste de la description, les pourcentages sont exprimés en poids.

### Exemples

### Exemple 1

### A) Préparation des compositions de ciment

Une composition de ciment selon l'invention (C-a) et trois compositions comparatives (A-c ; B-c et D-a) ont été préparées : A-c et B-c sont des ciments d'aluminate de calcium classiques (cristallisés) tandis que D-a est un ciment d'aluminate de calcium rendu amorphe mais présentant de l'oxyde de fer Fe₂O₃ à l'état de trace (0,7% en poids).

Tous les ciments ont été produits par fusion dans un four à fusion à réverbère pendant une durée de 8 heures à une température de 1500°C. Les clinkers C-a et D-a ont subi à la sortie du four un refroidissement brutal d'un flux d'air de 20°C pendant 15 secondes de sorte à obtenir un clinker d'aluminate de calcium amorphe ; tandis que les clinkers A-c et B-c ont subi un refroidissement lent. Les clinkers ont ensuite été broyés pour obtenir une surface Blaine de 5000 cm²/g.

Les formulations de ces compositions sont illustrées dans le tableau 1 ci-dessous :

**Tableau 1**

| | **Poids en %** | | | | |
|---|---|---|---|---|---|
| | **CaO** | **Al2O3** | **SiO2** | **Fe2O3** | **autres** |
| **C-a** | 47,4 | 38,0 | 4,7 | 7,2 | 2,8 |
| **A-c** | 38,6 | 39,0 | 4,5 | 15,2 | 2,7 |
| **B-c** | 47,7 | 37,8 | 4,2 | 7,6 | 2,7 |
| **D-a** | 51,4 | 39,1 | 5,7 | 0,7 | 2,5 |

Les ciments testés présentent les phases minéralogiques suivantes :

**Tableau 2**

| | **Phases (%)** | | | | | | | |
|---|---|---|---|---|---|---|---|---|
| **Type** | **NC*** | **C12A7** | **CA** | **C3A** | **C2S** | **C4AF/CT** | **C2AS** | **Spinel** |
| **C-a** | 98 | 2 | 0 | 0 | 0 | 0 | 0 | 0 |
| **A-c** | 0 | 4 | 57 | 0 | 12 | 19 | 2 | 6 |
| **B-c** | 0 | 61 | 0 | 0 | 16 | 23 | 0 | 0 |
| **D-a** | 99 | 0 | 0 | 1 | 0 | 0 | 0 | 0 |

| | | | | | | | | |
|---|---|---|---|---|---|---|---|---|
| NC : non cristallisé | | | | | | | | |

### B) Préparation des compositions de mortiers

Les quatre compositions de ciment ci-dessus ont été utilisées afin de préparer quatre compositions de mortier dont les formulations sont illustrées dans le tableau 3 :

**Tableau 3**

| | | **Dosage (% en poids)** | | | |
|---|---|---|---|---|---|
| **Composés** | **Fonctions** | **m A-c** | **m B-c** | **m C-a** | **m Da** |
| A-c | liant | 60 | - | - | - |
| B-c | | - | 60 | - | - |
| C-a | | - | - | 60 | - |
| D-a | | - | - | - | 60 |
| NE 14 | sable | Jusqu'à 100 | | | |
| Conpac500 | Superplastifiant (Peramin) | 0,2 | | | |
| Acide citrique | Inhibiteur de prise | - | - | - | 0,05 |
| Carbonate de lithium | Accélérateur de prise | 0,4 | 0,15 | - | - |
| Eau | | 13 | 16 | 13 | 14 |

Le temps de prise de ces quatre formulations a été ajusté à 3 minutes au moyen de régulateurs de prise et la quantité d'eau a été définie de sorte à obtenir le même aspect pour les différentes compositions de mortier testées.

### C) Caractérisations

### ✔ Profils exothermiques

Les mortiers sont mélangés à la main pendant 30 secondes, puis 30 g de la matière mélangée est immédiatement versé dans un récipient cylindrique en plastique (25 mm x 100 mm, diamètre x hauteur) contenant un thermocouple de type K relié à un enregistreur de température Testo 177.

### ✔ Essais de traction

Pour des raisons pratiques liées au temps de prise très court des compositions étudiées, la résistance initiale a été mesurée en utilisant principalement un test de traction nécessitant moins de matière.

Pour chaque essai, le test est effectué à l'aide d'une dalle de béton normalisée (30x30x10 cm, Rocholl Gmbh). 9 trous présentant une dimension de 10 mm x 70 mm (diamètre x hauteur) sont percés sur chaque dalle. Chaque trou est dépoussiéré et saturé d'eau pendant 5 minutes. Avant le test de traction, l'excès d'eau est éliminé de l'orifice et la composition de mortier à tester est coulée dans le trou après le mélange. Ensuite, une armature en acier (8 mm x 90 mm, diamètre x hauteur) est immédiatement intégrée dans le mortier et reliée à un dynamomètre pour mesurer la charge à la rupture en fonction du temps.

### D) Résultats

Tel qu'indiqué ci-dessus, les profils exothermiques ont été réalisés sur des mortiers dont le temps de prise a été ajusté de manière à obtenir une réactivité similaire de l'ordre de 3 à 6 minutes, ce qui a été considéré comme assez long pour placer l'armature en acier et assez court pour offrir un durcissement ultra-rapide.

Ainsi, les mortiers obtenus à partir des ciments "A-c" et "B-c" ont été accélérés au Li₂CO₃. Le mortier obtenu à partir du ciment "D-a" a été retardé à l'acide citrique, alors qu'aucun régulateur de prise classique n'a été utilisé pour le mortier obtenu selon l'invention à partir du ciment « C-a ».

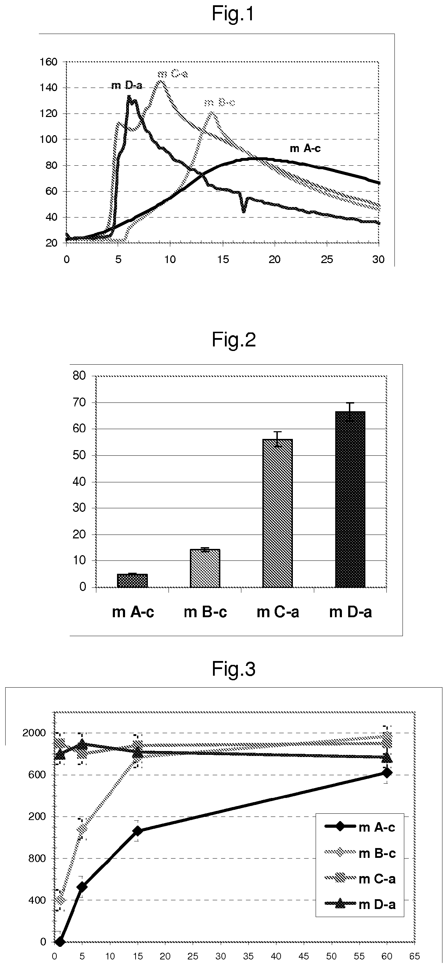

Les données recueillies sont présentées sur la figure 1, tandis que la figure 2 illustre le taux de chauffage calculé à partir de cette expérience (à partir de l'apparition de la première température maximale du pic).

Les profils correspondants exothermiques au cours du temps pour tous les mortiers permet une classification en fonction de la forme de la courbe de température en deux groupes principaux :
- les mortiers obtenus à partir des ciments "B-c" et "A-c" où il apparaît une légère augmentation de la température pendant les 10 premières minutes et une faible cinétique de la température (5°C/minet 14° C/min respectivement pour "A-c" et "B-c").
- les mortiers obtenus à partir des ciments "D-a" et "C-a", qui présentent une augmentation brusque du profil exothermique juste après que la température a commencé à monter et une cinétique à haute température (66,5°C/min et 56°C/min respectivement pour "D-a" 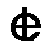 "C-a").

La figure 3 illustre les résultats du test de traction.

En ce qui concerne les mortiers obtenus à partir des ciments "A-c" et "B-c", la charge de traction augmente lentement pendant les 15 premières minutes avec une valeur de 1063 daN pour le mortier "A-c" et de 1770 daN pour le mortier «B-c». A titre de comparaison, on obtient des valeurs de 1800 daN en seulement une minute après la mise en traction des mortiers obtenus à partir des ciments "C-a" et "D-a". Cette valeur de contrainte de traction ne change pas de façon significative par la suite, ce qui démontre l'ultra réactivité ultra de ces deux liants.

### Exemple 2

Une composition de ciment selon l'invention comprenant un traitement de surface antivieillissement, à savoir B3, et une composition selon l'invention sans traitement antivieillissement, à savoir A3, ont été préparées.

Tout comme précédemment, les ciments ont été produits par fusion dans un four à fusion à réverbère pendant une durée de 8 heures à une température de 1500°C. Les clinkers ont subi à la sortie du four un refroidissement brutal d'un flux d'air de 20°C pendant 15 secondes de sorte à obtenir un clinker d'aluminate de calcium amorphe. Les clinkers ont ensuite été broyés pour obtenir une surface Blaine de 3000 cm²/g selon les compositions testées.

Les formulations de ces compositions sont illustrées dans le tableau 4 ci-dessous :

**Tableau 4**

| **Exemples de composition de ciment** | **CaO** | **Al2O3** | **SiO2** | **Fe2O3** | **autres** | **Finesse Blaine (cm²/g)** | **Traitement de surface (% en poids par rapport au poids de la composition de ciment)** |
|---|---|---|---|---|---|---|---|
| **A3** | 47,5 | 36,5 | 4,4 | 7,2 | 4,4 | 3000 | Aucun |
| **B3** | 47,5 | 36,5 | 4,4 | 7,2 | 4,4 | 3000 | 0,1% acide adipique et 0,2% de paraffine |

Un essai de reprise de masse est réalisé sur le ciment seul (A3 ou B3) à l'aide d'une coupelle aluminium dans laquelle sont positionnés 25 grammes de ciment à tester. La coupelle ainsi préparée est pesée et placée à 20°C et 70 % d'humidité relative. L'essai de reprise de masse consiste à suivre l'évolution du poids de la coupelle en fonction du temps d'exposition. Le résultat est exprimé en % de reprise de masse par rapport à la masse de ciment.

La Demanderesse a trouvé que l'ajout d'un agent antivieillissement permet de réduire la reprise de masse après 13 jours d'exposition à 20°C et 70% d'humidité relative de plus de 70% (71%) pour les compositions B3 par rapport respectivement à A3.

Ainsi, les compositions de ciment selon l'invention comprenant un agent antivieillissement présentent une reprise de masse beaucoup plus faible que celles de compositions de ciment selon l'art antérieur.

Par conséquent, les compositions de ciment selon l'invention présentent une sensibilité à l'humidité moindre et donc une durée de vie améliorée par rapport aux compositions de ciment selon l'art antérieur.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Composition de ciment à prise ultra-rapide comprenant au moins de l'aluminate de calcium amorphe comprenant en poids par rapport au poids total de l'aluminate de calcium amorphe :
(a) de 35 à 55% d'oxyde de calcium CaO (C),
(b) de 19 à 55% d'alumine Al₂O₃ (A),
le ratio molaire C/A étant supérieur ou égal à 1,5,
(c) de 0 à 10% de silice SiO₂,
**caractérisée en ce que** ledit aluminate de calcium amorphe comprend (d) de 5 à 16% d'oxyde de fer Fe₂O₃.

2. Composition de ciment selon la revendication 1, dans laquelle l'aluminate de calcium amorphe comprend en poids par rapport au poids total d'aluminate de calcium amorphe de 5 à 10%, de préférence de 5 à 8% d'oxyde de fer (d).

3. Composition de ciment selon l'une des revendications précédentes, dans laquelle l'aluminate de calcium amorphe comprend en poids par rapport au poids total d'aluminate de calcium amorphe de 42 à 52%, de préférence de 47 à 51% d'oxyde de calcium (a).

4. Composition de ciment selon l'une des revendications précédentes, dans laquelle l'aluminate de calcium amorphe comprend en poids par rapport au poids total d'aluminate de calcium amorphe de 25 à 48%, de préférence de 34 à 42% d'alumine (b).

5. Composition de ciment selon l'une des revendications précédentes, comprenant en outre en poids par rapport au poids total d'aluminate de calcium amorphe de 1 à 8% et plus particulièrement de 3 à 6% de silice SiO₂ (c).

6. Composition de ciment selon l'une des revendications précédentes, dans laquelle l'aluminate de calcium amorphe comprend une vitesse de dissolution dans l'eau supérieure ou égale à 15.10⁻⁶ mol.s⁻¹.m⁻².

7. Composition de ciment selon l'une des revendications précédentes, dans laquelle l'aluminate de calcium amorphe comprend une surface spécifique Blaine mesurée selon la norme NF EN196-6 allant de 2000 à 7000 cm²/g.

8. Composition de ciment selon l'une des revendications précédentes, comprenant un traitement de surface antivieillissement composé d'un composé organique comportant au moins deux fonctions hydrophiles et une chaîne hydrophobe.

9. Composition de ciment selon l'une des revendications précédentes, comprenant en poids par rapport au poids total de la composition de ciment de 45 à 55% de sulfate de calcium et de 45 à 55% d'aluminate de calcium amorphe.

10. Procédé de fabrication d'une composition de ciment à prise ultra-rapide selon l'une des revendications 1 à 9 comprenant les étapes suivantes :
i) l'introduction dans un four à fusion de matières premières sources d'au moins d'oxyde de calcium, d'alumine et d'oxyde de fer ;
ii) la cuisson dans le four à fusion à une température minimale permettant la fusion de la composition pendant une durée permettant d'obtenir la fusion complète des matières premières, de sorte à former un clinker d'aluminate de calcium liquide ;
iii) la récupération en sortie du four dudit clinker d'aluminate de calcium liquide ;
iv) le refroidissement après cuisson dudit clinker d'aluminate de calcium liquide de sorte à faire baisser brutalement la température du clinker d'aluminate de calcium à une température inférieure à sa température de cristallisation afin d'obtenir un aluminate de calcium amorphe ;
v) éventuellement, le broyage du clinker d'aluminate de calcium amorphe obtenu à l'étape iv) de sorte à obtenir un ciment d'aluminate de calcium avec optionnellement du sulfate de calcium et/ou un agent antivieillissement composé d'un composé organique comportant au moins deux fonctions hydrophiles et une chaine hydrophobe; et
vi) éventuellement, le mélange du ciment d'aluminate de calcium obtenu à l'étape v) avec du sulfate de calcium et/ou optionnellement l'ajout d'un composé organique de sorte à obtenir un ciment d'aluminate de calcium amorphe présentant un traitement de surface antivieillissement, si ceux-ci n'ont pas été ajoutés lors de l'étape v).

11. Procédé de fabrication d'une composition de ciment à prise ultra-rapide selon la revendication 10, dans lequel le four à fusion est un four à réverbère.

12. Utilisation de la composition de ciment à prise ultra-rapide selon l'une quelconque des revendications 1 à 9 pour accélérer la prise des ciments Portland.

13. Utilisation de la composition de ciment à prise ultra-rapide selon la revendication 9 pour former de l'ettringite.

## Patentansprüche

1. Ultraschnell abbindende Zementzusammensetzung, umfassend mindestens ein amorphes Calciumaluminat, umfassend, bezogen auf das Gewicht im Verhältnis zum Gesamtgewicht des amorphen Calciumaluminats:
(a) von 35 bis 55 % Calciumoxid CaO (C),
(b) von 19 bis 55 % Aluminiumoxid Al₂O₃ (A), wobei das Molverhältnis C/A größer oder gleich 1,5 ist,
(c) von 0 bis 10 % Siliciumdioxid SiO₂,
**dadurch gekennzeichnet, dass** das amorphe Calciumaluminat (d) von 5 bis 16 % Eisenoxid Fe₂O₃ umfasst.

2. Zementzusammensetzung nach Anspruch 1,
wobei das amorphe Calciumaluminat, bezogen auf das Gewicht im Verhältnis zum Gesamtgewicht des amorphen Calciumaluminats, von 5 bis 10 %, vorzugsweise von 5 bis 8 %, Eisenoxid (d) umfasst.

3. Zementzusammensetzung nach einem der vorhergehenden Ansprüche,
wobei das amorphe Calciumaluminat, bezogen auf das Gewicht im Verhältnis zum Gesamtgewicht des amorphen Calciumaluminats, von 42 bis 52 %, vorzugsweise von 47 bis 51 %, Calciumoxid (a) umfasst.

4. Zementzusammensetzung nach einem der vorhergehenden Ansprüche,
wobei das amorphe Calciumaluminat, bezogen auf das Gewicht im Verhältnis zum Gesamtgewicht des amorphen Calciumaluminats, von 25 bis 48 %, vorzugsweise von 34 bis 42 %, Aluminiumoxid (b) umfasst.

5. Zementzusammensetzung nach einem der vorhergehenden Ansprüche,
ferner umfassend, bezogen auf das Gewicht im Verhältnis zum Gesamtgewicht des amorphen Calciumaluminats, von 1 bis 8 % und insbesondere von 3 bis 6 % Siliciumdioxid SiO₂ (c).

6. Zementzusammensetzung nach einem der vorhergehenden Ansprüche,
wobei das amorphe Calciumaluminat eine Lösungsgeschwindigkeit in Wasser größer oder gleich 15.10⁻⁶ mol.s⁻¹.m⁻² umfasst.

7. Zementzusammensetzung nach einem der vorhergehenden Ansprüche,
wobei das amorphe Calciumaluminat eine spezifische Blaine-Oberfläche, gemessen gemäß der Norm NF EN 196-6, von 2000 bis 7000 cm²/g umfasst.

8. Zementzusammensetzung nach einem der vorhergehenden Ansprüche,
umfassend eine Antialterungs-Oberflächenbehandlung, welche aus einer organischen Verbindung besteht, die mindestens zwei hydrophile Funktionen und eine hydrophobe Kette umfasst.

9. Zementzusammensetzung nach einem der vorhergehenden Ansprüche,
umfassend, bezogen auf das Gewicht im Verhältnis zum Gesamtgewicht der Zementzusammensetzung, von 45 bis 55 % Calciumsulfat und von 45 bis 55 % amorphes Calciumaluminat.

10. Verfahren zur Herstellung einer ultraschnell abbindenden Zementzusammensetzung nach einem der Ansprüche 1 bis 9, umfassend die folgenden Schritte:
i) Einbringen von Ausgangsmaterialien, die von mindestens einem Calciumoxid, Aluminiumoxid und Eisenoxid stammen, in einen Schmelzofen;
ii) Kochen in dem Schmelzofen bei einer minimalen Temperatur, die das Schmelzen der Zusammensetzung während einer Dauer gestattet, die das Erhalten des vollständigen Schmelzens der Ausgangsmaterialien gestattet, um einen Klinker aus flüssigem Calciumaluminat zu bilden;
iii) Gewinnen des Klinkers aus flüssigem Calciumaluminat am Ausgang des Ofens;
iv) Abkühlen des Klinkers aus flüssigem Calciumaluminat nach dem Kochen, um die Temperatur des Klinkers aus Calciumaluminat rasch auf eine Temperatur unter seiner Kristallisationstemperatur abzusenken, um ein amorphes Calciumaluminat zu erhalten;
v) gegebenenfalls Zerkleinern des in Schritt iv) erhaltenen Klinkers aus amorphem Calciumaluminat, um einen Zement aus Calciumaluminat gegebenenfalls mit Calciumsulfat und/oder einem Antialterungsmittel zu erhalten, welches aus einer organischen Verbindung besteht, die mindestens zwei hydrophile Funktionen und eine hydrophobe Kette umfasst; und
vi) gegebenenfalls Mischen des in Schritt v) erhaltenen Zements aus Calciumaluminat mit Calciumsulfat und/oder gegebenenfalls Zusetzen einer organischen Verbindung, um einen Zement aus amorphem Calciumaluminat zu erhalten, der eine Antialterungsbehandlung aufweist, wenn diese nicht bereits in Schritt v) zugesetzt wurden.

11. Verfahren zur Herstellung einer ultraschnell abbindenden Zementzusammensetzung nach Anspruch 10,
wobei der Schmelzofen ein Strahlungsofen ist.

12. Verwendung der ultraschnell abbindenden Zementzusammensetzung nach einem der Ansprüche 1 bis 9, zur Beschleunigung des Abbindens von Portland-Zement.

13. Verwendung der ultraschnell abbindenden Zementzusammensetzung nach Anspruch 9, zur Bildung von Ettringit.

## Claims

1. An ultra-fast setting cement composition containing at least amorphous calcium aluminate comprising by weight, as compared to amorphous calcium aluminate total weight:
(a) from 35 to 55% of calcium oxide CaO (C),
(b) from 19 to 55% of alumina Al₂O₃ (A), the C/A molar ratio being higher than or equal to 1.5,
(c) from 0 to 10% of silica SiO₂,
**characterized in that** said amorphous calcium aluminate comprises (d) from 5 to 16% of iron oxide Fe₂O₃.

2. A cement composition according to claim 1, wherein said amorphous calcium aluminate comprises by weight, as compared to amorphous calcium aluminate total weight, from 5 to 10%, preferably from 5 to 8% of iron oxide (d).

3. A cement composition according to any one of the preceding claims, wherein said amorphous calcium aluminate comprises by weight, as compared to amorphous calcium aluminate total weight, from 42 to 52%, preferably from 47 to 51% of calcium oxide (a).

4. A cement composition according to any one of the preceding claims, wherein said amorphous calcium aluminate comprises by weight, as compared to amorphous calcium aluminate total weight, from 25 to 48%, preferably from 34 to 42% of alumina (b).

5. A cement composition according to any one of the preceding claims, further comprising by weight, as compared to amorphous calcium aluminate total weight, from 1 to 8%, and especially from 3 to 6% of silica SiO₂ (c).

6. A cement composition according to any one of the preceding claims, wherein said amorphous calcium aluminate has a dissolution rate in water higher than or equal to 15.10⁻⁶ mol.s⁻¹.m⁻².

7. A cement composition according to any one of the preceding claims, wherein said amorphous calcium aluminate has a specific surface area (Blaine value) measured according to Standard NF EN196-6 ranging from 2000 to 7000 cm²/g.

8. A cement composition according to any one of the preceding claims, comprising an anti-ageing surface treatment composed of an organic compound comprising at least two hydrophilic functions and one hydrophobic chain.

9. A cement composition according to any one of the preceding claims, comprising by weight, as compared to the cement composition total weight, from 45 to 55% of calcium sulfate and from 45 to 55% of amorphous calcium aluminate.

10. A method for preparing an ultra-fast setting cement composition according to any one of the preceding claims, comprising the following steps:
i) introducing into a furnace for melting raw material sources at least calcium oxide, alumina and iron oxide;
ii) curing in the melting furnace at a minimum temperature enabling the melting of the composition within a time period making it possible to achieve the complete melting of the raw materials, so as to form a liquid calcium aluminate clinker;
iii) recovering said liquid calcium aluminate clinker right at the furnace outlet;
iv) cooling down after curing of said liquid calcium aluminate-based clinker, so as to suddenly lower the temperature of the calcium aluminate-based clinker to a temperature below its crystallization temperature and to obtain amorphous calcium aluminate;
v) optionally grinding the amorphous calcium aluminate-based clinker obtained in step iv), so as to obtain a calcium aluminate-based cement optionally with calcium sulfate and/or an anti-ageing agent composed of an organic agent comprising at least two hydrophilic functions and one hydrophobic chain ; and
vi) optionally combining the calcium aluminate-based cement obtained in step v) with calcium sulfate and/or optionally adding an organic compound so as to obtain an amorphous calcium aluminate-based cement provided with an anti-ageing surface treatment, if they have not been added during step v).

11. A method for preparing an ultra-fast setting cement composition according to claim 10, wherein the melting furnace is a reverberatory furnace.

12. Use of the ultra-fast setting cement composition according to any one of the preceding claims 1 to 9 for accelerating the setting of Portland.

13. Use of the ultra-fast setting cement composition according to claim 9 for preparing ettringite.
